# EUROPEAN PATENT APPLICATION

(11) **EP 3 447 694 A1**
(43) Date of publication of application: **27.02.2019**
(21) Application number: 17187024.9
(22) Date of filing: 21.08.2017
(51) Int. Cl.: G06Q 10/06, G06Q 50/04, G05B 23/02

(54) **SYSTEM AND METHOD FOR TEMPORAL PLANNING AND MONITORING OF MACHINE STATES**

(71) Applicant: Siemens Aktiengesellschaft, 80333 München (DE)
(72) Inventor: CECCHERINI, Marina, 16126 Genova (IT); GIANNOTTA, Domenico, 16152 Genova (IT); FERRANDI, Tiziano, 08860 Castelldefels Barcelona (IT)
(74) Representative: Maier, Daniel Oliver

(57) **Abstract**

The present invention concerns a system and a method for planning and monitoring operating states of plant machines, the method comprising:
- configuring a new model for operating states of a machine of a plant within a single graphical editor capable of listing states and categories of states for each of the machines of the plant in function of statuses related data generated by the machines;
- automatically collecting said statuses related data from the machine of the plant;
- automatically matching the statuses related data collected from the machine and the operating states listed in the new model;
- automatically displaying the operating states of the machine in function of the time for a given period of time.

## Description

The invention relates to a method and a system for improving plant efficiency by planning and monitoring plant machine states.

The present invention takes place within the context of Manufacturing Execution Systems (hereafter "MES"). As defined by the Manufacturing Enterprise Solutions Association (MESA International), a MES "is a dynamic information system that drives effective execution of manufacturing operations", by managing "production operations from point of order release into manufacturing to point of product delivery into finished goods" and by providing "mission critical information about production activities to others across the organization and supply chain via bi-directional communication."

The functions that MESs usually include, in order to improve quality and process performance of manufacturing plants, are resource allocation and status, dispatching production orders, data collection/acquisition, quality management, maintenance management, performance analysis, operations/detail scheduling, document control, labor management, process management and product tracking.

For example, the Siemens Corp. offers a broad range of MES products under its SIMATIC IT® product family.

Within this context, one issue remains the temporal planning and monitoring of states of plant machines in order to improve plant efficiency. An objective of the present invention is to propose an efficient planning and monitoring of machine states of each machine of a plant in order to improve the global efficiency of the plant, and avoid time consuming operations for configuring the machines of said plant. Said objective is achieved by a new method and system for planning and monitoring machine states of a plant, which allow an operator to intuitively and simply configure any planning and monitoring of plant machines, notably within a MES, reducing the time necessary to configure a plant and also costs related to operators training. This solution is achieved according to the object of the independent claims. Dependent claims present further advantages of the present invention.

The present invention proposes in particular a method for planning and monitoring operating states of plant machines, the method comprising:
a) configuring a new model for operating states of a machine of a plant, in particular of each machine of said plant, within a single graphical editor capable of listing states and categories of states for each of the machines of the plant in function of statuses related data generated by the machines. According to the present invention, the configured new model is a hierarchical list of statuses related data for the whole set of machines of the plant, said statuses related data being typically numerical values outputted by a machine and from which an operating state might be determined according to the present invention;
b) automatically collecting, preferentially in real time, said statuses related data from the machine of the plant, in particular of each machine of the plant, and optionally storing said statuses related data in a database;
c) automatically matching, preferentially in real time, the statuses related data collected from the machine, in particular of each machine, and the operating states listed in the new model;
d) automatically displaying the operating states of said machine, in particular of each machine, in function of the time for a given period of time, which can be for instance chosen by an operator.

According to the present invention, configuring the new model preferentially comprises:
- displaying within said single graphical editor a workspace designed for the planning and monitoring of plant machine operating states, wherein the graphical editor is a computer program enabling a creation and/or a reporting of categories of machine operating states, wherein for each category, at least one operating state is configured for defining a working condition of the machine, also called "the status" of the machine at a given time;
- creating the new model of operating states for a machine of the plant within said workspace of the graphical editor, wherein the new model is characterized by one or several operating states (or statuses) of the machine, wherein preferentially a virtual button on said workspace automatically gives access to categories of operating states, wherein a selection of one of said categories further automatically gives access to lists of operating states for the machine;
- selecting an operating state for the machine;
- for each selected operating state, automatically displaying on said workspace a graphical object, e.g. a graphical bar, representing the operating state of the machine;
- optionally, automatically storing the created new model free of any operator action.

The present invention also concerns a system for planning and monitoring operating states of plant machines, said system comprising:
- a user interface configured for displaying a workspace of a graphical editor designed for the planning and monitoring of plant machine operating states;
- a processing unit connected to the user interface and to at least one machine of the plant, the processing unit storing instructions for running the graphical editor of the claimed method, the hierarchical list of statuses related data of the new model, and being configured for carrying out the steps of the claimed method in order to display the operating states of each of the machines in function of the time for a given period of time by means of the user interface. In particular, the processing unit is configured for automatically saving any new model created by means of the graphical editor and for collecting said data from the machines of the plant, optionally storing said data in a database, and then matching the collected data with the operating states defined in the new model.

The invention will now be better illustrated with the aid of the appended figures, of which:
- Figure 1: shows a schematic representation of a system according to the invention.
- Figure 2: shows a schematic flow diagram of a configuration of a new model according to the invention.
- Figure 3: is a schematic illustration of a graphical representation of the graphical editor according to the invention.

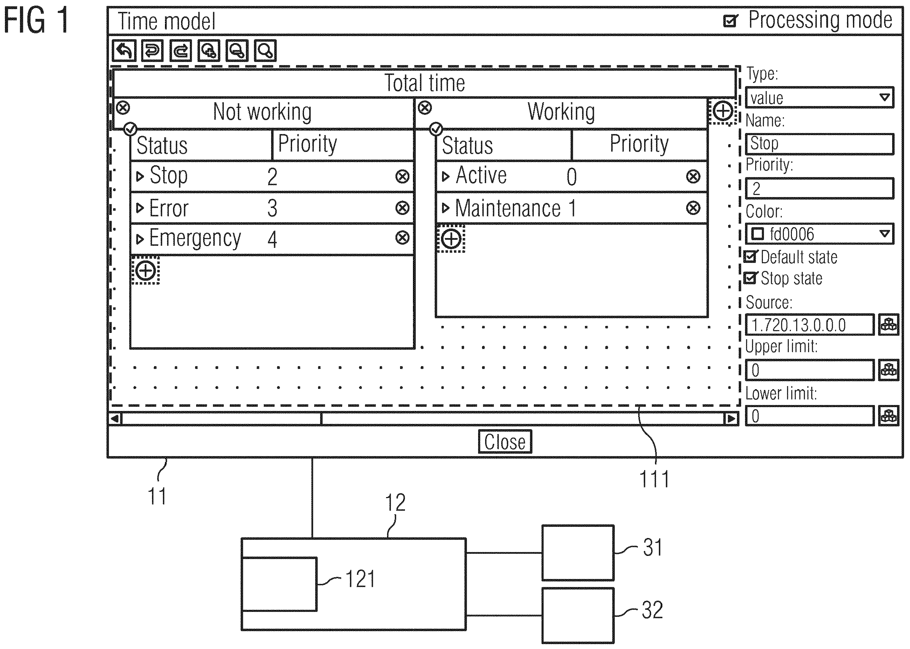

With reference to figure 1, a preferred embodiment of a system 1 according to the invention is presented. Said system 1 comprises the following components:
- a user interface 11 comprising for instance a display for displaying a workspace 111 enabling an operator to plan and monitor operating states of one or several machines 31, 32 of a plant, wherein said workspace is a graphical zone on said display that enables a user to create a model of operating states of the machines 31, 32. Said user interface might be further configured for monitoring, preferentially in real time, the operating state of each of the machines of the plant in function of the time, for instance in function of an interval of time defined by an operator;
- a processing unit 12, comprising at least one processor and a memory 121, said processing unit 12 being connected to the user interface 11 and to the machines 31, 32 of the plant in order to collect statuses related data from the machines 31, 32 in order to monitor in real time of the operating states of said machines. According to the present invention, the processing unit 12 is in particular configured for automatically determining, preferentially in real time, the operating state of a machine from the statuses related data collected from the machines 31, 32. This determination of the operating state might be performed by comparing the statuses related data collected from the machines with the statuses related data stored within the new model in order to find which operating state corresponds to the collected statuses related data.

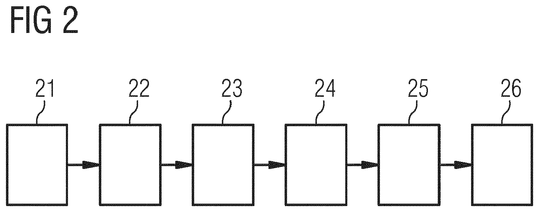

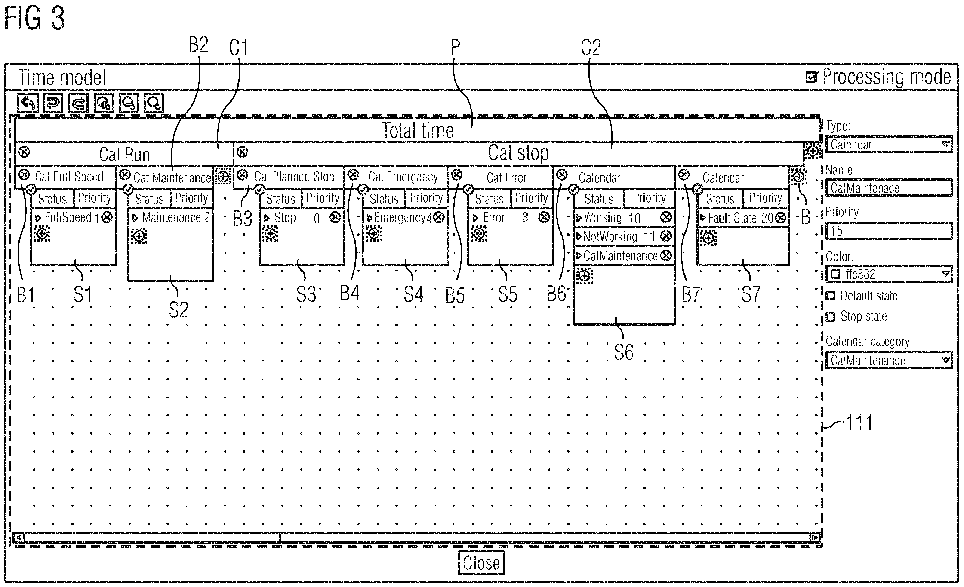

The configuration of a new model according to the invention is schematically represented by Fig. 2, wherein the system according to the invention, in particular its processing unit, is configured for displaying 21, for instance by means of a user interface display, a workspace of a graphical editor, wherein said workspace is designed for enabling an operator to plan and monitor operating states of plant machines. Said workspace 111 is schematically illustrated in Fig. 3 which shows a preferred graphical layout of the graphical editor. Typically, the workspace 111 comprises a virtual button B enabling a user to create a new model for machine operating states. For instance, clicking on said virtual button opens a list of categories of operating states, like the categories "Run" C1, "Stop" C2, "Working", "Not working", "Calendar", "Alarm", "Fullspeed", "Maintenance", "Planned stop", "Emergency", "Error", "Fault". For each category and at each selection of a category by an operator, the graphical editor automatically provides a list of operating states S1, S2, S3, S4, S5, S6, S7 that can be preferentially defined as row value, bit value, range of values, alarm category or linked to a calendar category that might be generated or outputted by a machine of the plant. Advantageously, the list of categories and operating states can be limitlessly extended by an operator in order to match operating states of machines of the plant. Examples of operating states are for instance:
- "Stop", "Error", or "Emergency" for the category "Not working";
- "Shift", "Working week", "Fiscal year" for the category "Calendar";
- "Active", "Maintenance" for the category "Working";
- "Fullspeed 1", "Fullspeed 2" for the category "Fullspeed".

For each operating state that has been selected within a category, the graphical editor of the system according to the invention enables the operator to define a priority, color, and information, as parameters for the operating states.

Using the graphical editor, the operator can easily create 22 a new model of operating states for a machine of the plant wherein all information regarding the operation of the machine are available within a single view, i.e. within said workspace of the graphical editor. The new model is characterized by different operating states S1, S2, S3, S4, S5, S6, S7 (or statuses) of the machine defined for different operating states categories of the machine that might occur during a working process P of the machine, wherein each operating state may comprise or define further information or parameter related to the operation of the machine, so that an operating state of the machine might be determined from statuses related data outputted by the machine and collected by the processing unit.

Advantageously, for each selected operating state, the system according to the invention automatically displays 24 on said workspace 111 a graphical bar B1, B2, B3, B4, B5, B6, B7, representing the operating state of the machine. According to the claimed method, the system automatically stores 25 the created new model in the memory 121 free of any operator action. Additionally, the graphical editor further provides commands for helping model creation, like a resetting function enabling the model to return to an initial state, an undo/redo function enabling to reorder a step and navigate backward and forward within the steps, a zoom in/out function facilitating reading information of the created model like operating states of the machines, a reset zoom function which is configured for setting the zoom level in such a way that the entire created model appears in the user interface display, and a expand all/collapse all function configured for expanding or closing all categories and statuses.

According to a preferred embodiment, the method according to the invention further comprises an interaction 26 of the processing unit with the machine in order to collect statuses related data from the machines. It enables the system according to the invention to provide an operator with a monitoring of operating states of the machines in function of the time from matching statuses related data collected outputted by the machine and statuses related data stored within the operating states defined for said machines in the created model.

## Claims

1. Method for planning and monitoring operating states of plant machines, the method comprising the following steps:
- configuring a new model for operating states of a machine of a plant within a single graphical editor capable of listing states and categories of states for each of the machines of the plant in function of statuses related data generated by the machines;
- automatically collecting said statuses related data from the machine of the plant;
- automatically matching the statuses related data collected from the machine and the operating states listed in the new model;
- automatically displaying the operating states of said machine in function of the time for a given period of time.

2. Method according to claim 1, wherein configuring a new model comprises:
- displaying (21) within a graphical editor a workspace designed for the planning and monitoring of plant machine operating states;
- creating (22) a new model of operating states for the machine of the plant within said workspace of the graphical editor, wherein the new model is **characterized by** one or several operating states of the machine;
- selecting (23) an operating state for the machine for a category of operating states;
- for each selected operating state, automatically displaying (24) on said workspace a graphical object representing the operating state of the machine.

3. Method according to claim 1 or 2, wherein a virtual button on said workspace automatically gives access to categories of operating states, wherein a selection of one of said categories further automatically gives access to lists of operating states for the machine.

4. System (1) for planning and monitoring operating states of a plant machine, said system (1) comprising:
- a user interface (11) for displaying a workspace (111) of a graphical editor designed for the planning and monitoring of plant machine operating states;
- a processing unit (12), connected to the user interface (11) and to at least one machine (31, 32) of the plant, the processing unit (12) storing instructions in a memory (121) for running the graphical editor and being configured for carrying out the steps of the method according to one of the claims 1-3.
